# EUROPEAN PATENT APPLICATION

(11) **EP 3 754 743 A1**
(43) Date of publication of application: **23.12.2020**
(21) Application number: 18906541.0
(22) Date of filing: 09.11.2018
(51) Int. Cl.: H01M 2/10

(54) **BATTERY MODULE**

(30) Priority: 16.02.2018 JP 2018025643
(71) Applicant: Hitachi, Ltd., Tokyo 100-8280 (JP)
(72) Inventor: ODA Masanari, Tokyo 100-8280 (JP); FUJIMOTO Takayuki, Tokyo 100-8280 (JP); KOUNO Ryuji, Tokyo 100-8280 (JP); INOUE Takeshi, Tokyo 100-8280 (JP); HONDA Mitsutoshi, Tokyo 100-8280 (JP); OKABE Satoru, Tokyo 100-8280 (JP)
(74) Representative: Strehl Schübel-Hopf & Partner
(86) International application number: PCT/JP2018/041598
(87) International publication number: WO 2019/159451

(57) **Abstract**

A battery module includes: a plurality of battery cells; a middle plate that secures the plurality of battery cells; a module case that houses the plurality of battery cells and the middle plate; and a module lid that seals the module case. The module case has module case bolts, the module case bolt extends in an in-plane direction of the plurality of battery cells, and the middle plate and the module case are fastened by the module case bolt in the in-plane direction of the plurality of battery cells. As a result, the stability of the arrangement of the battery module can be improved.

## Description

### Technical Field

The present invention relates to a battery module.

### Background Art

As a technique for improving the reliability of a power storage device, PTL 1 discloses the following content. A power storage device 1 includes: a housing 1a having a container main body 10 and a lid 20 provided with external connection terminals 21a and 21b; a power storage module main body 30 having a cell stack 32 arranged inside the housing 1a; a bolt 11 regulating movement of the power storage module main body 30 with respect to a bottom wall 10a of the container main body 10; and a support member 35 regulating movement of the power storage module main body 30 with respect to the lid 20.

### Citation List

### Patent Literature

PTL 1: JP 2016-72230 A

### Summary of Invention

### Technical Problem

In PTL 1, fixing to the bottom wall 10a is performed by the bolt 11 inserted into a through-hole formed in the bottom wall 10a of the container main body 10, that is, the bolt 11 functions as a first regulating portion that regulates the movement of the power storage module main body 30 with respect to the bottom wall 10a of the container main body 10. In this case, a space corresponding to the height of a head of the bolt 11 is generated in the lower part of the container body, and the stability of arrangement as the power storage device is likely to decrease.

An object of the present invention is to improve the stability of arrangement of a battery module.

### Solution to Problem

Features of the present invention for solving the above problem are, for example, as follows.

A battery module includes: a plurality of battery cells; a middle plate that secures the plurality of battery cells; a module case that houses the plurality of battery cells and the middle plate; and a module lid that seals the module case. The module case has module case bolts, the module case bolt extends in an in-plane direction of the plurality of battery cells, and the middle plate and the module case are fastened by the module case bolt in the in-plane direction of the plurality of battery cells.

### Advantageous Effects of Invention

According to this invention, the stability of arrangement of the battery module can be improved. Other objects, configurations, and effects which have not been described above become apparent from an embodiment to be described hereinafter.

### Brief Description of Drawings

[FIG. 1] FIG. 1 is an external view of a laminate-type battery.
[FIG. 2] FIG. 2 is an external view of the laminate-type battery.
[FIG. 3] FIG. 3 is an external view of a battery module.
[FIG. 4] FIG. 4 is an external view of the battery module.
[FIG. 5] FIG. 5 is an external view of the battery module.

### Description of Embodiment

Hereinafter, an embodiment of the present invention will be described with reference to the drawings. The following descriptions illustrate specific examples of the content of the present invention. The present invention is not limited to these descriptions, and various changes and modifications by those skilled in the art can be made within the scope of the technical idea disclosed in the present specification. In addition, the same reference signs will be attached to those having the same function in the entire drawing for describing the present invention, and the repetitive description thereof will be omitted in some cases.

The term "to" described herein is used as the meaning that includes numerical values described before and after "to" as a lower limit value and an upper limit value. In numerical ranges that are described stepwise in the present specification, an upper limit value or a lower limit value of one numerical range may be replaced with an upper limit value or a lower limit value of a numerical range of another stage. Upper limit values or lower limit values of the numerical ranges described in the present specification may be replaced with values shown in an embodiment.

In the present specification, a lithium ion secondary battery will be described as an example of a laminate-type battery. The lithium ion secondary battery is an electrochemical device that enables storage and use of electric energy by inserting and extracting lithium ions into and from an electrode in an electrolyte. This is referred to by another name of a lithium ion battery, a non-aqueous electrolyte secondary battery, or a non-aqueous electrolyte secondary battery, and the present invention can be applied to all these batteries. The technical idea of the present invention can be applied to a sodium ion secondary battery, a magnesium ion secondary battery, a calcium ion secondary battery, a zinc secondary battery, an aluminum ion secondary battery, and the like.

### First Embodiment

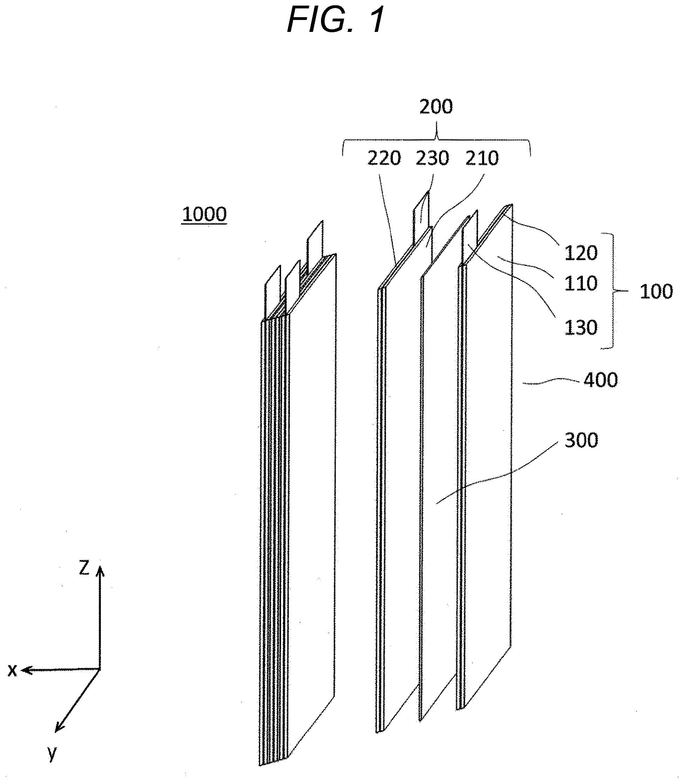

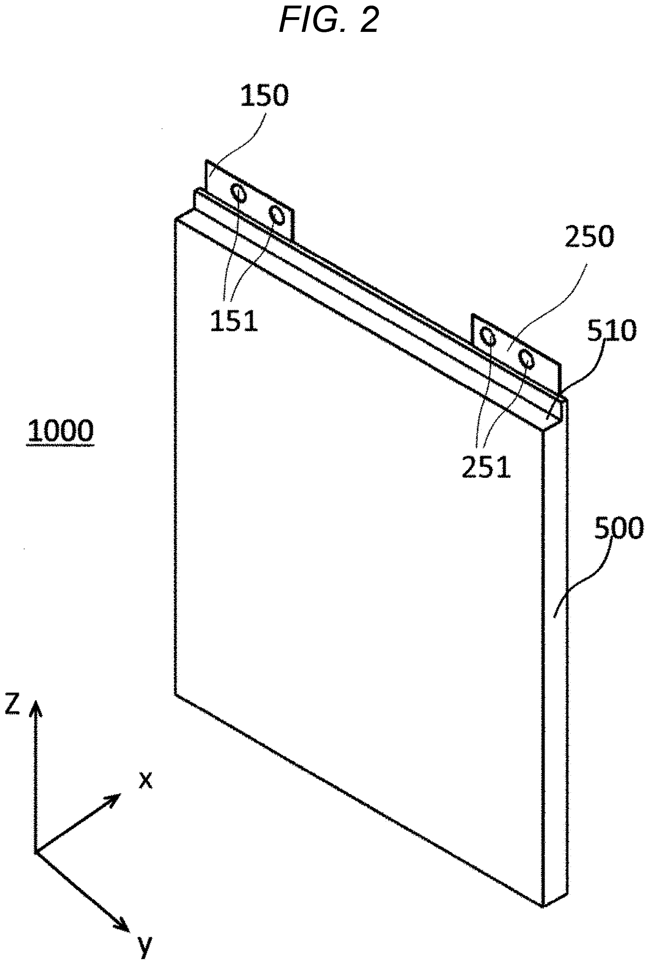

FIGS. 1 and 2 are external views of the laminate-type battery. A battery cell 1000 includes a positive electrode 100 (electrode), a negative electrode 200 (electrode), a positive electrode terminal 150 (electrode terminal), a negative electrode terminal 250 (electrode terminal), a separator 300, and a package 500.

The positive electrode 100 has a positive electrode mixture layer 110 (electrode mixture layer), a positive electrode current collector 120 (electrode current collector), and a positive electrode tab 130 (electrode tab). The positive electrode mixture layer 110 is formed on both surfaces of the positive electrode current collector 120. The negative electrode 200 has a negative electrode mixture layer 210 (electrode mixture layer), a negative electrode current collector 220 (electrode current collector), and a negative electrode tab 230 (electrode tab). The negative electrode mixture layer 210 is formed on both surfaces of the negative electrode current collector 220.

The positive electrode 100, the separator 300, and the negative electrode 200 are laminated to form an electrode body 400.

The battery cell 1000 is configured by laminating a plurality of the electrode bodies 400. As the positive electrode tabs 130 and the negative electrode tab 230 are connected, an electrical parallel connection is formed in the battery cell 1000. The battery cell 1000 in FIGS. 1 and 2 is a laminate-type secondary battery. The present invention can also be applied to a wound-type secondary battery. The laminating direction of the electrode bodies 400 is set as an x-axis direction, a direction in which the electrode tab protrudes is set as a z-axis direction, and a direction perpendicular to the xz plane is set as a y-axis direction.

### <Electrode Mixture Layer>

The positive electrode mixture layer 110 has a positive electrode active material that enables insertion and extraction of Li. Examples of the positive electrode active material may include LiCo-based oxide, LiNi-based composite oxide, LiMn-based composite oxide, Li-Co-Ni-Mn composite oxide, LiFeP-based oxide, LiMnPO₄-based oxide, LiMn₁₋ₓFeₓPO₄ (0 < 1 < x)-based oxide and the like, but are not limited thereto. The negative electrode mixture layer 210 has a negative electrode active material that enables insertion and extraction of Li. Examples of the negative electrode active material may include a carbon-based material such as natural graphite, soft carbon, and amorphous carbon, Si metal and a Si alloy, lithium titanate, lithium metal, and the like, but are not limited thereto.

The electrode mixture layer may contain an electrode conductive agent that is responsible for the electron conductivity in the electrode mixture layer, an electrode binder that ensures adhesion between materials in the electrode mixture layer, and further, a solid electrolyte for ensuring the ion conductivity in the electrode mixture layer.

A method for producing the electrode mixture layer is, for example, as follows. First, a material to be contained in the electrode mixture layer is dissolved in a solvent to form a slurry, and the slurry is formed on the electrode current collector by coating. Examples of the coating method include a method using a roll coater, a doctor blade method, a dipping method, and a spray method. Next, the electrode mixture layer applied on the electrode current collector is dried to remove the solvent. Next, the electrode mixture layer is pressed to ensure the electron conductivity and ion conductivity in the electrode mixture layer.

### <Electrode Current Collector and Electrode Tab>

The electrode current collector is electrically connected to the electrode tab. The electrode tab extends from a side surface of the electrode current collector. In FIG. 1, no electrode mixture layer is formed on the electrode tab. However, the electrode mixture layer may be formed on the electrode tab within a range that does not adversely affect battery performance.

Examples of the positive electrode current collector 120 and the positive electrode tab 130 may include an aluminum foil, an aluminum perforated foil having a hole diameter of 0.1 to 10 mm, expanded metal, a foamed aluminum plate, stainless steel, titanium, and the like, but are not limited thereto. Examples of the negative electrode current collector 220 and the negative electrode tab 230 may include a copper foil, a perforated copper foil having a hole diameter of 0.1 to 10 mm, expanded metal, a foamed copper plate, stainless steel, titanium, nickel, and the like, but are not limited thereto.

The thickness of the electrode current collector and the electrode tab is preferably 10 nm to 1 mm. From the viewpoint of achieving both the energy density of the battery cell 1000 and the mechanical strength of the electrode, the thickness is preferably about 1 µm to 100 µm.

### <Separator 300>

The separator 300 is provided between the positive electrode 100 and the negative electrode 200, and pass lithium ions to prevent short circuit between positive electrode 100 and negative electrode 200 when the battery cell 1000 is a lithium ion secondary battery. Examples of a material forming the separator 300 may include a microporous membrane, a solid electrolyte, and the like, but are not limited thereto.

Examples of the microporous membrane may include polyolefin such as polyethylene and polypropylene, a glass fiber, and the like, but are not limited thereto. When the microporous membrane is used for the separator 300, the battery cell 1000 is filled with an electrolyte by injecting the electrolyte into the battery cell 1000 from one open side of the package 500 or a liquid injection hole formed in the package 500.

The electrolyte has a solvent and a lithium salt, for example, and serves as a medium that transmits lithium ions between the positive electrode 100 and the negative electrode 200. Examples of the solvent may include ethylene carbonate (EC), dimethyl carbonate (DMC), diethyl carbonate (DEC), propylene carbonate, butylene carbonate, γ-butyrolactone, phosphoric acid triester, trimethoxymethane, dioxolan, diethyl ether, sulfolane, and the like, but are not limited thereto. These materials may be used alone or in combination. Examples of the lithium salt may include LiPF₆, LiBF₄, LiClO₄, LiCF₃SO₃, LiCF₃CO₂, LiAsF₆, LiSbF₆, lithium bisoxalate borate (LiBOB), a lithium imide salt (for example, lithium bis(fluorosulfonyl) imide or LiFSI), and the like, but are not limited thereto. These lithium salts may be used alone or in combination.

Examples of the solid electrolyte may include a semisolid electrolyte in which a sulfide such as Li₁₀Ge₂PS₁₂ and Li₂S-P₂S₅, an oxide such as Li-La-Zr-O, an ionic liquid, or a room-temperature molten salt is supported on an organic polymer, an inorganic particle, or the like, a gel electrolyte using a polymer gel as an electrolyte, and the like, but are not limited thereto. When using the solid electrolyte as the separator 300, the solid electrolyte serves as a medium that transmits lithium ions between the positive electrode 100 and the negative electrode 200, and the above electrolyte is basically unnecessary, so that an electrical series connection can be formed in the battery cell 1000. However, the electrolyte may be added to the battery cell 1000 even when the solid electrolyte is used as the separator 300 as long as the electrical short circuit in the battery cell 1000 can be prevented.

The separator 300 may be provided as a sheet between the positive electrode 100 and the negative electrode 200, or may be formed on the electrode mixture layer by coating. The separator 300 may be formed on both surfaces of the electrode mixture layer. If the separator 300 is formed between the positive electrode 100 and the negative electrode 200, the separator 300 may be formed on one surface of the electrode mixture layer. The thickness of the separator 300 is preferably several nm to several mm from the viewpoint of ensuring the energy density and electronic insulation of the battery cell 1000.

### <Electrode Terminal>

The electrode terminal is electrically connected to the electrode tab. Examples of the positive electrode terminal 150 and the negative electrode terminal 250 may include metal such as aluminum, copper, nickel, and stainless steel, but are not limited thereto. The electrode terminal has a positive electrode terminal hole 151 (electrode terminal hole) and a negative electrode terminal hole 251 (electrode terminal hole) through which a cell fastening bolt 1400 passes.

### <Package 500>

The package 500 houses the electrode body 400. The electrode terminal protrudes from one side of the package 500. The package 500 has a package stepped portion 510. A block 1100 is formed above the package stepped portion 510 in the z-axis direction so as to oppose the electrode tab. Examples of the package 500 may include a material having corrosion resistance to the electrolyte or the solid electrolyte, such as an aluminum laminate film, aluminum, stainless steel, and nickel-plated steel, and the like, but are not limited thereto.

### <Battery Module 5000>

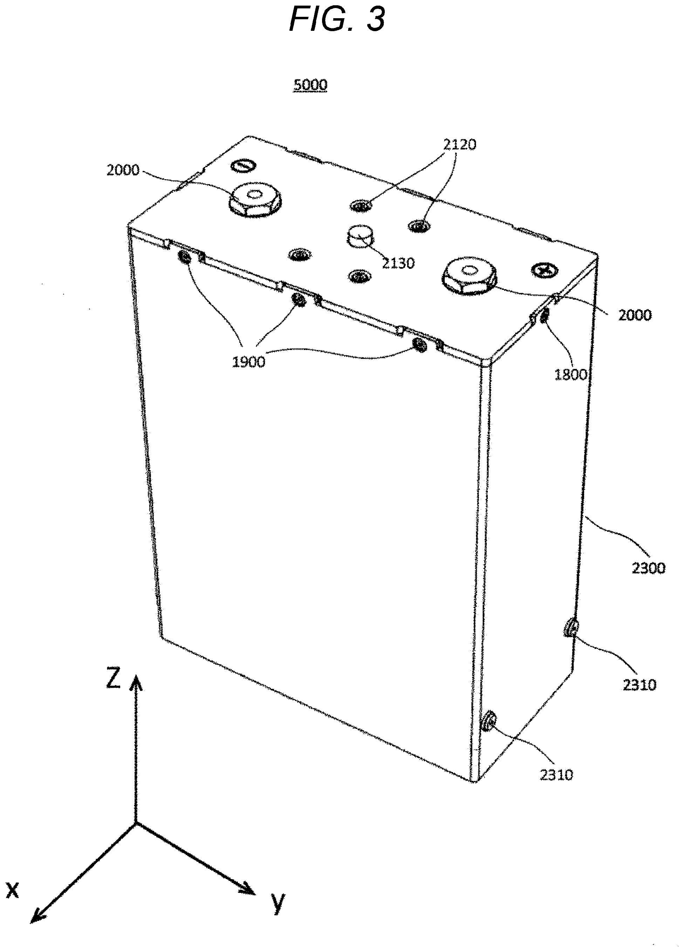

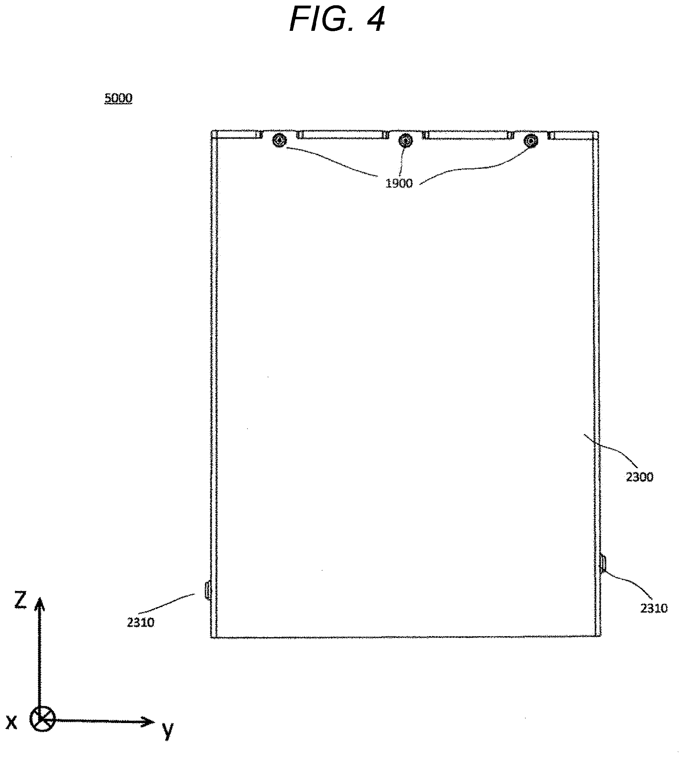

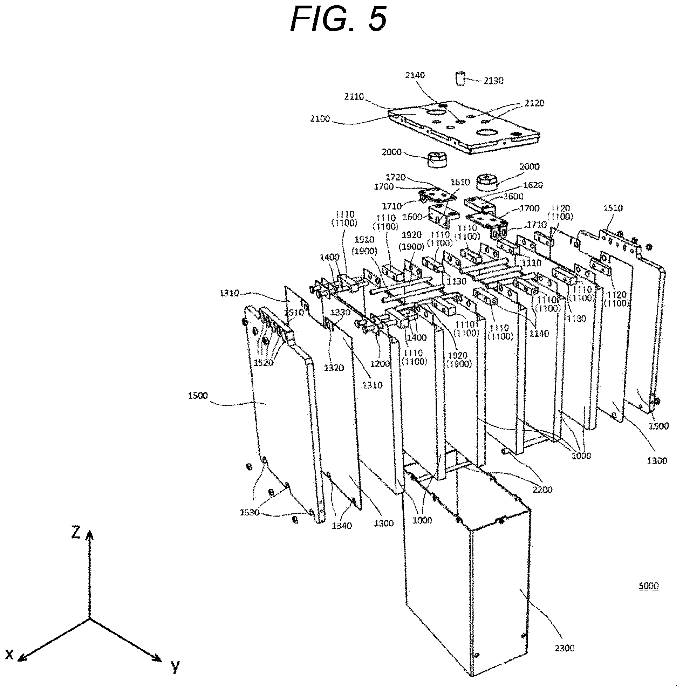

FIGS. 3, 4, and 5 are external views of a battery module. A battery module 5000 includes the battery cell 1000, the block 1100, a square washer 1200, an insulating sheet 1300, the cell fastening bolt 1400, a middle plate 1500, an L-shaped bracket 1600, an L-shaped module terminal 1700, a bolt with a hole 1800, a lid-side stud bolt 1900, a cylindrical module terminal 2000, a module lid 2100, a bottom-side stud bolt 2200, and a module case 2300. A laminating direction of the battery cells 1000 is an x-axis direction, a direction in which the module lid 2100 is formed with respect to the battery cells 1000 is a z-axis direction, and a direction perpendicular to the xz plane is a y-axis direction.

### <Block 1100>

The block 1100 has an intermediate block 1110 and an end block 1120. The intermediate block 1110 is provided between electrode terminals in the plurality of battery cells 1000 in the x-axis direction. The end block 1120 is provided between the battery cell 1000 provided at the end of the battery module 5000 and the middle plate 1500 in the y-axis direction. The middle plate 1500 and the end block 1120 are not connected physically and electrically. A screw for fastening the cell fastening bolt 1400 is cut in the end block 1120 arranged on the opposite side to the square washer 1200 in the x-axis direction. As a result, the plurality of the battery cells 1000 and the block 1100 can be physically and electrically connected using the square washer 1200 and the cell fastening bolt 1400.

The electrode terminals of the plurality of battery cells 1000 are physically and electrically connected in parallel by the block 1100. A size of the block 1100 on the yz plane is smaller than a size of the protruding portion of the electrode terminal. As a result, contact between the block 1100 and the package 500 can be prevented, and a poor electrical connection between block 1100 and battery cell 1000 can be reduced.

The block 1100 has a first block hole 1130 through which the cell fastening bolt 1400 passes when viewed from the x-axis direction. The block 1100 installed below the cylindrical module terminal 2000 in the z-axis direction has a second block hole 1140 through which the bolt with a hole 1800 passes when viewed from the y-axis direction. Examples of the block 1100 may include copper, aluminum, nickel, stainless steel, cladding materials thereof, plating using these materials, and the like, but are not limited thereto.

### <Square Washer 1200>

The square washer 1200 physically and electrically connect the plurality of battery cells 1000 and the block 1100 together with the end block 1120 and the cell fastening bolt 1400.

The square washer 1200 is provided between the battery cell 1000 provided at the end of the battery module 5000 and the middle plate 1500 in the x-axis direction. A size of the square washer 1200 on the yz plane and the size of the protruding portion of the electrode terminal are substantially the same, but may be different as long as there is no contact with the middle plate 1500. The square washer 1200 has a square washer hole through which the cell fastening bolt 1400 passes when viewed from the x-axis direction. Examples of the square washer 1200 may include the same materials as the block 1100, but are not limited thereto.

### <Insulating Sheet 1300>

The insulating sheet 1300 insulates the battery cells 1000 and the middle plate 1500. In the z-axis direction, the insulating sheet 1300 has an insulating sheet protrusion 1310 at an end of the insulating sheet 1300 on the side where the module lid 2100 is installed. The insulating sheet protrusion 1310 has an insulating sheet upper hole 1320 through which the lid-side stud bolt 1900 passes.

The insulating sheet protrusion 1310 has an insulating sheet notch 1330 on the side of the insulating sheet upper hole 1320 where the square washer 1200 is arranged in the y-axis direction. The insulating sheet notch 1330 allows the insulating sheet protrusion 1310 to tilt in the x-axis direction toward the side where the middle plate 1500 is installed. As a result, when the square washer 1200 and the middle plate 1500 are close to each other, the contact between the square washer 1200 and the middle plate 1500 is prevented while suppressing the movement of the entire insulating sheet 1300. The insulating sheet protrusion 1310 has an insulating sheet lower hole 1340 through which the bottom-side stud bolt 2200 passes when viewed from the x-axis direction.

Examples of the insulating sheet 1300 may include a fluororesin material such as polytetrafluoroethylene (PTFE), polypropylene (PP), and polybutylene terephthalate (PBT), and the like, but are not limited thereto.

### <Cell Fastening Bolt 1400>

The cell fastening bolt 1400 passes through the electrode terminal hole, the first block hole 1130, and the square washer hole. The cell fastening bolt 1400 is fastened with the square washer 1200. As a result, the electrodes of the plurality of battery cells 1000 come into physical contact with each other in the x-axis direction, and the plurality of battery cells 1000 are electrically connected in parallel. As the cell fastening bolt 1400 is fastened with the square washer 1200, the plurality of battery cells 1000 are fixed, and the vibration of the battery cells 1000 is suppressed. Examples of the cell fastening bolt 1400 may include the same materials as the block 1100, but are not limited thereto.

### <Middle Plate 1500>

The middle plate 1500 is provided between the insulating sheet 1300 and the module case 2300 in the x-axis direction. The middle plates 1500 sandwich the battery cells 1000. The middle plates 1500 installed at both ends of the battery cells 1000 in the x-axis direction secure the battery cells 1000. The middle plate 1500 has a middle plate protrusion 1510 at an end on the side where the module lid 2100 is installed in the z-axis direction.

The middle plates 1500 sandwich the battery cells 1000 and fixes the module case 2300 and the plurality of battery cells 1000 via the bottom-side stud bolt 2200. As a result, the vibration resistance of the battery module 5000 can be improved. The thickness of the middle plate 1500 is arbitrary as long as the securing pressure and vibration resistance can be ensured. When the thickness of the middle plate 1500 increases, the weight or volume of the battery module 5000 is likely to increase. Therefore, the thickness of the middle plate 1500 is preferably 1 to 20 mm, more preferably 5 to 15 mm, and still more preferably 8 to 10 mm.

The middle plate protrusion 1510 has a middle plate upper hole 1520 through which the lid-side stud bolt 1900 passes when viewed from the x-axis direction. The middle plate protrusion 1510 has a middle plate lower hole 1530 through which the bottom-side stud bolt 2200 passes when viewed from the x-axis direction. Examples of the middle plate 1500 may include the same materials as the block 1100, but are not limited thereto.

### <L-Shaped Bracket 1600>

The L-shaped bracket 1600 has an L-shape when viewed from the y-axis direction. The L-shaped bracket 1600 has an L-shaped bracket first hole 1610 through which the lid-side stud bolt 1900 passes, in a portion of the L-shaped bracket 1600 extending in the z-axis direction. The L-shaped bracket 1600 has an L-shaped bracket second hole 1620 through which a L-shaped bracket fastening bolt passes, in a portion of the L-shaped bracket 1600 extending in the x-axis direction. The L-shaped bracket 1600 and the module lid 2100 are fastened by the L-shaped bracket fastening bolt. Examples of the L-shaped bracket 1600 may include the same materials as the block 1100, but are not limited thereto.

### <L-Shaped Module Terminal 1700>

The L-shaped module terminal 1700 is electrically connected to the cylindrical module terminal 2000. The L-shaped module terminal 1700 extracts a current flowing through the electrode terminal via the cylindrical module terminal 2000 to the outside of the module case 2300. The L-shaped module terminal 1700 fixes the module lid 2100 and the electrode bodies 400 in the plurality of battery cells 1000. As a result, the vibration resistance of the battery module 5000 can be improved.

The L-shaped module terminal 1700 has an L-shape when viewed from the x-axis direction. The L-shaped module terminal 1700 has an L-shaped module terminal first hole 1710 through which the bolt with a hole 1800 passes, in a portion of the L-shaped module terminal 1700 extending in the z-axis direction. The L-shaped module terminal 1700 has an L-shaped module terminal second hole 1720 in a portion of the L-shaped module terminal 1700 extending in the y-axis direction. The L-shaped module terminal 1700 has an L-shaped module terminal fastening bolt that passes through the L-shaped module terminal second hole 1720. The L-shaped module terminal 1700 and the cylindrical module terminal 2000 are fastened and electrically connected by the L-shaped module terminal fastening bolt. Examples of the L-shaped module terminal 1700 may include the same materials as the block 1100, but are not limited thereto.

### <Bolt with Hole 1800>

The bolt with a hole 1800 is installed on the side of the block 1100 where the module case 2300 is arranged in the y-axis direction. The bolt with a hole 1800 passes through the second block hole 1140 and the L-shaped module terminal first hole 1710, and fastens the block 1100 and the L-shaped module terminal 1700. Examples of the bolt with a hole 1800 may include the same materials as the block 1100, but are not limited thereto.

### <Lid-Side Stud Bolt 1900>

The lid-side stud bolt 1900 has a lid-side end stud bolt 1910 and a lid-side central stud bolt 1920. The lid-side end stud bolt 1910 is installed at a position closer to the block 1100 than the lid-side central stud bolt 1920. In the y-axis direction, the lid-side central stud bolt 1920 is provided between the lid-side end stud bolts 1910. The lid-side end stud bolt 1910 passes through the insulating sheet upper hole 1320 and the middle plate upper hole 1520, and fixes the insulating sheet 1300 and the middle plate 1500. The lid-side central stud bolt 1920 passes through the L-shaped bracket first hole 1610 and the middle plate upper hole 1520, and fixes the L-shaped bracket 1600 and the middle plate 1500. When the lid-side stud bolt 1900 and the middle plate 1500 are fastened, a surface pressure is generated from the middle plate 1500 to the plurality of battery cells 1000 so that the plurality of battery cells 1000 are fixed. Examples of the lid-side stud bolt 1900 may include the same materials as the block 1100, but are not limited thereto.

### <Cylindrical Module Terminal 2000>

The cylindrical module terminal 2000 is fastened to the L-shaped module terminal 1700 via a bolt built in the cylindrical module terminal 2000. Examples of the cylindrical module terminal 2000 may include the same materials as the block 1100, but are not limited thereto.

### <Module Lid 2100>

The module lid 2100 seals the module case 2300. The module lid 2100 has a module lid first hole 2110 through which the cylindrical module terminal 2000 passes, a module lid second hole 2120 through which the L-shaped bracket fastening bolt passes, a rubber stopper 2130, and a rubber stopper hole 2140 into which the rubber stopper 2130 is inserted.

Through the rubber stopper hole 2140, it is possible to take out wirings of sensors that can be arbitrarily attached to the inside of the battery module 5000. The module lid 2100 is sealed by the rubber stopper 2130. Any shape may be adopted as the rubber stopper 2130 as long as the wirings of sensors can be taken out from the inside of the battery module 5000. For example, wirings of the battery module 5000 may be connected to take out the wirings outside the battery module 5000 by replacing the rubber stopper 2130 with a resin screw or an arbitrary connector/receptacle. Examples of the module lid 2100 may include polybutylene terephthalate (PBT), phenolic resin, acrylonitrile-butadiene-styrene resin (ABS), and the like, but are not limited thereto.

### <Bottom-Side Stud Bolt 2200>

The bottom-side stud bolt 2200 is provided between the plurality of battery cells 1000 and the module case 2300 in the z-axis direction. The bottom-side stud bolt 2200 passes through the insulating sheet lower hole 1340 and the middle plate lower hole 1530, and fixes the insulating sheet 1300 and the middle plate 1500. As the bottom-side stud bolt 2200 and the middle plate 1500 are fastened, a binding force is generated between the middle plate 1500 and the module case 2300, and the plurality of battery cells 1000 are stably fixed in the module case 2300. Examples of the bottom-side stud bolt 2200 may include the same materials as the block 1100, but are not limited thereto.

The height of the bottom-side stud bolt 2200 from the bottom surface and the attached number thereof can be arbitrarily changed. The plurality of bottom-side stud bolts 2200 may have different heights from each other. As a result, it is possible to prevent screw heads of the bottom-side stud bolts 2200 of the plurality of battery modules 5000 from interfering with each other when the plurality of battery modules 5000 are arranged closely.

### <Module Case 2300>

The module case 2300 houses the plurality of battery cells 1000, the middle plate 1500, the lid-side stud bolt 1900, and the bottom-side stud bolt 2200. The plurality of battery cells 1000 and the middle plate 1500 are sealed inside the module case 2300. As a result, the plurality of battery cells 1000 can be stably secured by the middle plate 1500.

The module lid 2100 is provided on an exposed portion of the module case 2300. The module case 2300 has a module case bolt 2310 extending in the y-axis direction (in-plane direction of the plurality of battery cells 1000). In the z-axis direction, the module case bolt 2310 is installed above the bottom-side stud bolt 2200 to prevent contact between the module case bolt 2310 and the bottom-side stud bolt 2200. In the y-axis direction, the module case 2300 and the middle plate 1500 are fastened by the module case bolt 2310. Examples of the module case 2300 may include the same materials as the block 1100, but are not limited thereto.

The module case bolts 2310 installed at both ends in the y-axis direction are installed at different heights in the z-axis direction (the direction in which the module lid 2100 is installed). With such a three-dimensional arrangement, the shock resistance of the battery module 5000 can be improved.

In one embodiment of the present invention, the module case bolt 2310 is attached in the y-axis direction instead of the bottom portion of the module case 2300 in the z-axis direction, and thus, the mountability and arrangement stability of the battery module 5000 are improved. In addition, there is no obstacle, such as the module case bolt 2310, in the bottom portion of the module case 2300, and thus, the entire surface of the battery module 5000 can be brought into contact with a mounting surface of the battery module 5000, and the heat dissipation of the battery module 5000 is improved. In addition, a heat conductive sheet or the like can be inserted into the bottom portion of the battery module 5000, and the heat dissipation of the battery module 5000 can be improved. In addition, as long as contents of the battery cell 1000 do not leak from the plurality of battery cells 1000, it is possible to prevent the leakage of the contents of the battery cell 1000 to the outside of the battery module 5000 regardless of the mountability of the module case bolt 2310. In addition, the influence of the vibration of the battery module 5000 can be reduced, and the reliability of the battery module 5000 can be improved.

A cooling pipe may be arranged inside or on the surface of the middle plate 1500. As the cooling pipe is arranged, the temperature inside the battery module 5000 can be kept within a desired temperature range. As a passage of a pipe to connect a pipe inside a securing jig and the outside of the module case 2300, an opening may be formed in a side surface of the module case 2300, and the pipe may be formed to pass through the opening similarly to the bottom-side stud bolt 2200. The opening formed in the module case 2300 may be sealed with a resin or the like after the pipe is formed to pass therethrough. If a location near the bottom-side stud bolt 2200 is selected as the place where the piping passes, the stress on the pipe during the vibration can be reduced.

### Reference Signs List

- 100: positive electrode
- 110: positive electrode mixture layer
- 120: positive electrode current collector
- 130: positive electrode tab
- 150: positive electrode terminal
- 151: positive electrode terminal hole
- 200: negative electrode
- 210: negative electrode mixture layer
- 220: negative electrode current collector
- 230: negative electrode tab
- 250: negative electrode terminal
- 251: negative electrode terminal hole
- 300: separator
- 400: electrode body
- 500: package
- 510: package stepped portion
- 1000: battery cell
- 1100: block
- 1110: intermediate block
- 1120: end block
- 1130: first block hole
- 1140: second block hole
- 1200: square washer
- 1300: insulating sheet
- 1310: insulating sheet protrusion
- 1320: insulating sheet upper hole
- 1330: insulating sheet notch
- 1340: insulating sheet lower hole
- 1400: cell fastening bolt
- 1500: middle plate
- 1510: middle plate protrusion
- 1520: middle plate upper hole
- 1530: middle plate lower hole
- 1600: L-shaped bracket
- 1610: L-shaped bracket first hole
- 1620: L-shaped bracket second hole
- 1700: L-shaped module terminal
- 1710: L-shaped module terminal first hole
- 1720: L-shaped module terminal second hole
- 1800: bolt with hole
- 1900: lid-side stud bolt
- 1910: lid-side end stud bolt
- 1920: lid-side central stud bolt
- 2000: cylindrical module terminal
- 2100: module lid
- 2110: module lid first hole
- 2120: module lid second hole
- 2130: rubber stopper
- 2140: rubber stopper hole
- 2200: bottom-side stud bolt
- 2300: module case
- 2310: module case bolt
- 5000: battery module

## Claims

1. A battery module comprising:
a plurality of battery cells;
a middle plate that secures the plurality of battery cells;
a module case that houses the plurality of battery cells and the middle plate; and
a module lid that seals the module case,
wherein the module case has module case bolts,
the module case bolt extends in an in-plane direction of the plurality of battery cells, and
the middle plate and the module case are fastened by the module case bolt in the in-plane direction of the plurality of battery cells.

2. The battery module according to claim 1, wherein
the module case bolts are installed at both ends in the in-plane direction of the plurality of battery cells, and
the module case bolts are installed at different heights in a direction in which the module lid is installed.

3. The battery module according to claim 1, further comprising:
a lid-side stud bolt; and a bottom-side stud bolt,
wherein the lid-side stud bolt and the bottom-side stud bolt are housed in the module case, and
the lid-side stud bolt and the bottom-side stud bolt are fastened to the middle plate.

4. The battery module according to claim 1, further comprising
an insulating sheet,
wherein the insulating sheet is provided between the plurality of battery cells and the middle plate in a laminating direction of the plurality of battery cells.

5. The battery module according to claim 4, wherein
the insulating sheet has an insulating sheet protrusion,
the insulating sheet protrusion has an insulating sheet notch, and
the insulating sheet notch causes the insulating sheet protrusion to tilt toward a side where the middle plate is installed, in the laminating direction of the plurality of battery cells.

6. The battery module according to claim 1, wherein
the plurality of battery cells and the middle plate are sealed in the module case.
